# EUROPEAN PATENT SPECIFICATION

(11) **EP 3 663 051 B1**
(45) Date of publication and mention of the grant of the patent: **13.08.2025**
(21) Application number: 19208517.3
(22) Date of filing: 12.11.2019
(51) Int. Cl.: B25F 5/00, H02J 7/00

(54) **BATTERY UNIT AND ELECTRIC TOOL SYSTEM**
BATTERIEEINHEIT UND ELEKTRISCHES WERKZEUGSYSTEM
UNITÉ DE BATTERIE ET SYSTÈME D'OUTIL ÉLECTRIQUE

(30) Priority: 27.11.2018 JP 2018221667
(43) Date of publication of application: 10.06.2020
(73) Proprietor: Panasonic Intellectual Property Management Co., Ltd., Osaka-shi, Osaka 540-6207 (JP)
(72) Inventor: IKEDA, Masaki, Osaka-shi, Osaka 540-6207 (JP)
(74) Representative: Müller-Boré & Partner Patentanwälte PartG mbB

(56) References cited:
- EP-A1- 2 764 956
- EP-A2- 1 903 657
- WO-A1-2012/114749
- US-A1- 2005 073 282

## Description

### Technical Field

The present disclosure relates to battery units and electric tool systems, and specifically, to a battery unit attachable to an electric tool body and an electric tool system including the battery unit.

### Background Art

An electric tool system used along with an electric tool adapter is conventionally known (for example, Document 1 (WO 2012017833 A1)). The electric tool system described in Document 1 includes an electric tool adapter which enables a battery pack to be attached to an electric tool (an electric tool body). The electric tool adapter includes a DC-DC converter. The DC-DC converter is configured to be freely detachably attached to each of the electric tool and the battery pack. The DC-DC converter is configured to step up or step down a voltage of the battery pack to convert the voltage into a drive voltage of the electric tool, and the DC-DC converter is configured to supply the drive voltage to the electric tool. Thus, the electric tool system described in Document 1 enables the electric tool to satisfactorily operate even when a battery pack having a voltage different from the rated voltage of the electric tool is used.

In the electric tool system described in Document 1, an electric tool adapter is indispensable when a battery pack having a voltage different from the rated voltage of the electric tool is used. However, different rated voltages of electric tools have different compatible electric tool adapters, and when an incompatible electric tool adapter is adopted, failure may occur in operation of the electric tool.

US 2005/073282 A1 describes a cordless power tool system, wherein a battery pack which may be removably attachable to a cordless power tool and to a charger may include at least one battery cell and a power limiting device. The power limiting device may be arranged in series with the at least one battery cell for limiting power output of the battery pack based on the component that is connected to the pack. Current and hence power out of the battery pack may be controlled as a function of total internal impedance in the battery pack, which may be adjusted depending on the component that is connected to the pack.

EP 2 764 956 A1 describes a motor-driven appliance including a battery; a motor including permanent magnets as field magnets; a momentary maximum current upper limit storage unit in which a predetermined momentary maximum current upper limit is stored; a current detection unit that detects a current flowing in the motor; a current threshold setting unit that generates a current threshold based on the momentary maximum current upper limit, and outputs the generated current threshold; a current exceedance determination unit that determines whether the current detected by the current detection unit has become equal to or greater than the current threshold, and outputs an interruption signal used to interrupt a current path from the battery to the motor when the detected current has become equal to or greater than the current threshold; and a current flow interruption unit that interrupts the current path when the interruption signal is outputted from the current exceedance determination unit.

EP 1 903 657 A2 describes that when a battery pack having an output voltage of 14.4 V that is connectable to an electric tool in a sliding manner is used as a power supply source for the electric tool that is connectable to a battery pack in an insertion manner and has a rated voltage of 12 V, the electric tool and the battery pack are connected to each other with an adaptor interposed therebetween. The adaptor has an FET that is switched at a predetermined duty of a predetermined frequency. The battery pack and the electric tool are connected or disconnected to or from each other by the switching operation, thereby dropping the output voltage of the battery pack. The voltage from the battery pack is detected. When the detected voltage is out of a predetermined value range, it is judged that the overcurrent or overdischarge has occurred. Then, the FET is turned off to stop the electric tool.

WO 2012/114749 A1 describes a power tool system including: a secondary battery; a capacitor configured to supply a power to a motor; and a transforming unit configured to boost a battery voltage of the secondary battery to a charging voltage, the capacitor being charged with the charging voltage.

### Summary of Invention

The invention is defined by the independent claims, while preferred embodiments form the subject of the dependent claims.

It is an object of the present disclosure to provide a battery unit and an electric tool system which are configured to reduce the probability of occurrence of failure in an electric tool body.

A battery unit according to the present disclosure includes a battery pack. The battery pack accommodates a battery. The battery pack is attachable to the electric tool body. The battery pack includes an output controller. The output controller is configured to control an output of the battery to the electric tool body in accordance with a condition.

An electric tool system according to one aspect of the present disclosure includes the battery unit and the electric tool body.

### Brief Description of Drawings

FIG. 1 is a block diagram illustrating an electric tool system according to a first embodiment;
FIG. 2 is an exploded front view illustrating the electric tool system;
FIG. 3 is a block diagram illustrating an electric power tool system according to a second embodiment; and
FIG. 4 is an exploded front view illustrating the electric tool system of the second embodiment.

### Description of Embodiments

A battery unit and an electric tool system according to embodiments will be described below with reference to the drawings. Note that the embodiments below are mere examples of various embodiments of the present disclosure. Various modifications may be made to the following embodiments depending on design and the like as long as the object of the present disclosure is achieved. Moreover, figures described in the following embodiments are schematic views, and therefore, the ratio of sizes and the ratio of thicknesses of components in the drawings do not necessarily reflect actual dimensional ratios.

### First Embodiment

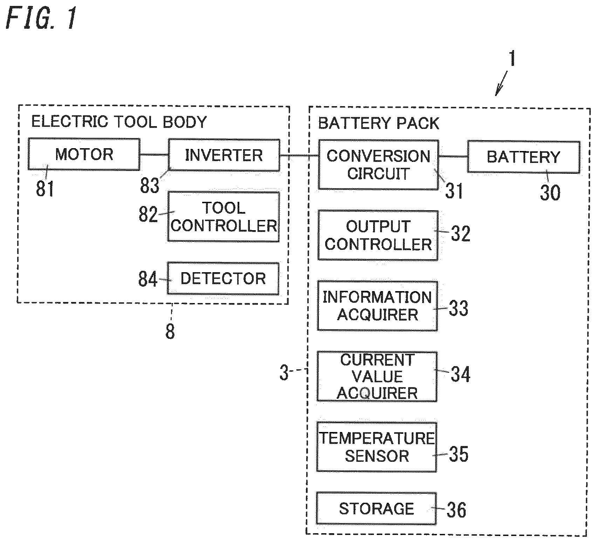

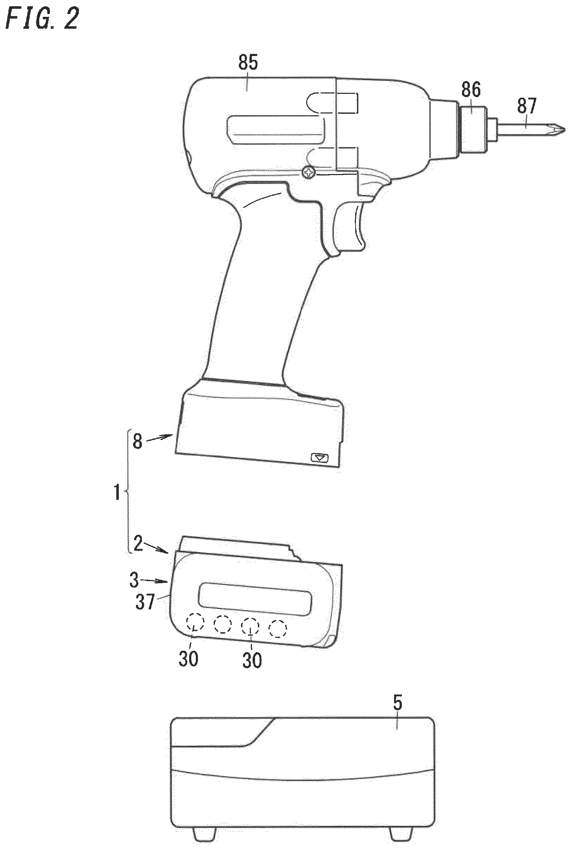

As illustrated in FIGS. 1 and 2, an electric tool system 1 of the present embodiment includes a battery unit 2 and an electric tool body 8. The battery unit 2 includes a battery pack 3. The battery unit 2 further includes a charger 5.

The battery pack 3 includes a plurality of (four) batteries 30 (only one of which is shown in FIG. 1). The battery pack 3 accommodates a plurality of batteries 30. Specifically, the battery pack 3 includes a battery pack body 37 having a box shape. The plurality of batteries 30 are accommodated in the battery pack body 37. The plurality of batteries 30 are secondary batteries. The plurality of batteries 30 are, for example, lithium ion batteries. The battery pack 3 is attachable to the electric tool body 8. Specifically, the battery pack 3 is detachably attachable to the electric tool body 8. The plurality of batteries 30 are connected in series to each other.

The plurality of batteries 30 supply electric power to the electric tool body 8. The electric tool body 8 includes a motor 81, a tool controller 82, an inverter 83, a detector 84, a body 85, and a chuck 86. The chuck 86 is attached to the body 85. To the chuck 86, a bit such as a drill bit 87 or a driver bit is attachable. Moreover, the battery pack body 37 is detachably attachable to the body 85. The tool controller 82 includes, for example, a microcontroller having a processor and memory. The processor executes a program stored in the memory, thereby realizing functions as the tool controller 82 in the present disclosure. The tool controller 82 controls operation of the motor 81. The motor 81 operates based on electric power output from the plurality of batteries 30 and rotates the bit. The motor 81 is, for example, a brushless motor.

The battery pack 3 is connectable to the charger 5. The charger 5 charges the plurality of batteries 30 (secondary batteries). The charger 5 has a plug and a cord. The plug is connectable to a socket which receives electric power from a commercial power supply. The charger 5 charges the plurality of batteries 30 by electric power supplied from the commercial power supply via the plug and the cord.

The battery pack 3 has storage 36. The storage 36 is, for example, read only memory (ROM), random access memory (RAM), or electrically erasable programmable read only memory (EEPROM). The storage 36 stores pieces of information regarding item numbers of various types of electric tool bodies 8 different from each other in item number, ranges of voltage suppliable to the various types of electric tool bodies 8 different from each other in item number, and pieces of information associating the pieces of information regarding item numbers with the ranges of voltage. That is, the storage 36 stores the pieces of information regarding item numbers of the various types of electric tool bodies 8 and the ranges of voltage suppliable to the electric tool bodies 8 having the item numbers in association with each other. Note that it is required only that the storage 36 stores the item number of at least one type of electric tool body 8 and the range of voltage suppliable to the electric tool body 8 having the item number. The storage 36 does not necessarily have to store item numbers of a plurality of electric tool bodies 8 different from each other in item number.

The battery pack 3 acquires, from the electric tool body 8 to which the battery pack 3 is attached, information regarding the item number of the electric tool body 8. The battery pack 3 then checks the item number with the plurality of item numbers stored in the storage 36. Attaching the battery pack 3 to, for example, the electric tool body 8 triggers the battery pack 3 to acquire, from the electric tool body 8, the information regarding the item number of the electric tool body 8. If the same item number as the item number acquired has been stored in the storage 36, the battery pack 3 determines, based on the pieces of information stored in the storage 36, a range of voltage suppliable to the electric tool body 8 having the item number, and the battery pack 3 controls an output (a total output) of the plurality of batteries 30 such that a total voltage of the plurality of batteries 30 is within this range. This enables the battery pack 3 and the plurality of batteries 30 to be used in each of a plurality of electric tool bodies 8 different from each other in item number and in range of voltage that is suppliable to each electric tool body 8.

Inputting, to the storage 36, the information regarding the item number of the electric tool body 8 and the information representing the range of voltage suppliable to the electric tool body 8 enables the range of voltage suppliable to the electric tool body 8 to be set to an arbitrary range. The range of voltage suppliable to the electric tool body 8 is set based on, for example, specifications of the motor 81 and the inverter 83. The information input to the storage 36 is provided, for example, from a physical server or a cloud server over a telecommunications network. Alternatively, the information input to the storage 36 is provided as information recorded on a non-transitory recording medium such as a memory card.

The battery pack 3 includes a conversion circuit 31. The conversion circuit 31 is a DC-DC converter. The conversion circuit 31 performs DC-DC conversion of a direct-current voltage as an output voltage (a total output voltage) of the plurality of batteries 30 into a voltage within the range suppliable to the electric tool body 8, and the conversion circuit 31 outputs the voltage to the electric tool body 8. The inverter 83 of the electric tool body 8 converts the direct-current voltage output from the conversion circuit 31 into an alternating-current voltage (alternating-current power) and outputs the alternating-current voltage to the motor 81.

The battery pack 3 includes an output controller 32. The output controller 32 includes, for example, a microcontroller having a processor. The processor executes a program stored in the storage 36, thereby realizing functions as the output controller 32 in the present disclosure. The conversion circuit 31 changes the magnitude of the output of the plurality of batteries 30 in accordance with the control performed by the output controller 32. The output controller 32 controls the conversion circuit 31 to control the output (i.e., the output after voltage conversion by the conversion circuit 31) of the plurality of batteries 30 to the electric tool body 8 in accordance with a condition. The condition includes a condition based on information regarding the electric tool body 8. The output controller 32 acquires, from the storage 36, the range of voltage suppliable to the electric tool body 8 as the information regarding the electric tool body 8, and the output controller 32 controls the output of the plurality of batteries 30 so as to fulfill the condition that the voltage falls within the range. The range of voltage suppliable to the electric tool body 8 is defined, for example, by an upper limit value of the voltage suppliable to the electric tool body 8. The upper limit value of the voltage suppliable to the electric tool body 8 is equal to, for example, a rated input voltage of the electric tool body 8. The output controller 32 determines, in accordance with the information regarding the item number as the information regarding the electric tool body 8, the upper limit value of the magnitude of the output voltage of the plurality of batteries 30. The output controller 32 controls, by pulse width modulation (PWM) control performed on the conversion circuit 31, the magnitude of the output voltage of the plurality of batteries 30 to be smaller than or equal to the upper limit value. For example, the conversion circuit 31 includes a switching element and a capacitor and turns on and off the switching element in accordance with the PWM signal from the output controller 32, thereby controlling the pulse width of the output voltage of the switching element. The conversion circuit 31 causes the capacitor to convert (smooth) the output voltage of the switching element into a voltage having an amplitude according to the pulse width.

Moreover, the output controller 32 determines, in accordance with the information regarding the electric tool body 8, the upper limit value of the magnitude of the output (specifically, the output voltage) of the plurality of batteries 30, and a timing (hereinafter referred to as a start timing) to start controlling of reducing the magnitude of the output (specifically, the output voltage) of the plurality of batteries 30 when the magnitude of the output (specifically, the output voltage) of the plurality of batteries 30 exceeds the upper limit value. Determining the upper limit value of the magnitude of the output (the output voltage) of the plurality of batteries 30 by the output controller 32 is as described above. The start timing is stored in association with the item number in the storage 36. In other words, the storage 36 stores pieces of information regarding item numbers of various types of electric tool bodies 8 and the start timings of the electric tool bodies 8 having the item numbers in association with each other. As the start timings, for example, timings determined in accordance with voltage resistance characteristics or anti-overcurrent characteristics of the various types of electric tool bodies 8 are stored in the storage 36. The anti-overcurrent characteristic is, for example, a characteristic that a current which flows through the motor 81 and which has such-and-such an A (ampere) or higher has to be interrupted within such-and-such seconds. As the start timing, the storage 36 stores, for example, information saying such-and-such seconds after the magnitude of the output voltage of the plurality of batteries 30 exceeds the upper limit value. The output controller 32 determines the start timing by acquiring, from the storage 36, a start timing corresponding to the item number of the electric tool body 8 to which the battery pack 3 is attached.

The battery pack 3 further includes an information acquirer 33, a current value acquirer 34, and a temperature sensor 35.

The information acquirer 33 is configured to acquire, from the electric tool body 8, information regarding the electric tool body 8. Specifically, when the battery pack 3 is attached to the electric tool body 8, the information acquirer 33 acquires, from the electric tool body 8, information regarding the item number of electric tool body 8.

In the electric tool body 8, the detector 84 includes, for example, a shunt resistor. The detector 84 detects the magnitude of a current flowing through the motor 81. The current value acquirer 34 acquires, from the detector 84, a detection value of the magnitude of the current flowing through the motor 81 detected by the detector 84. The output controller 32 controls the output of the plurality of batteries 30 to the electric tool body 8 in accordance with a condition based on the information regarding the electric tool body 8. The information regarding the electric tool body 8 includes the detection value acquired by the current value acquirer 34.

Specifically, when the detection value of the magnitude of the current flowing through the motor 81 exceeds the upper limit value, the output controller 32 controls the conversion circuit 31 such that the magnitude of an output current (a total output current) of the plurality of batteries 30 to the electric tool body 8 is less than or equal to the upper limit value. The output controller 32 controls the output voltage of the plurality of batteries 30 to control the output current of the plurality of batteries 30. The upper limit value of the magnitude of the current flowing through the motor 81 is determined by the output controller 32 based on the upper limit value of voltage suppliable to the electric tool body 8.

The temperature sensor 35 includes, for example, a thermistor. The temperature sensor 35 measures temperature of the plurality of batteries 30. The output controller 32 acquires a measured value of the temperature of the plurality of batteries 30 measured by the temperature sensor 35. The output controller 32 controls the output of the plurality of batteries 30 to the electric tool body 8 in accordance with a condition, wherein the condition includes a condition regarding the temperature of the plurality of batteries 30. Specifically, the output controller 32 controls the output of the plurality of batteries 30 to the electric tool body 8 in accordance with the measured value of the temperature of the plurality of batteries 30.

Specifically, when the measured value of the temperature of the plurality of batteries 30 exceeds a first temperature threshold, the output controller 32 controls the conversion circuit 31 such that the magnitude of the output current of the plurality of batteries 30 to the electric tool body 8 is reduced. Moreover, when the measured value of the temperature of the plurality of batteries 30 exceeds a second temperature threshold greater than the first temperature threshold, the output controller 32 controls the conversion circuit 31 such that output of the plurality of batteries 30 to the electric tool body 8 is stopped. Moreover, when the measured value of the temperature of the plurality of batteries 30 is smaller than a third temperature threshold lower than the first temperature threshold, the output controller 32 controls the conversion circuit 31 such that the magnitude of the output voltage of the plurality of batteries 30 to the electric tool body 8 is increased. Note that at this time, the output controller 32 controls such that the magnitude of the output voltage of the plurality of batteries 30 to the electric tool body 8 has a value smaller than or equal to an upper limit voltage suppliable to an electric tool body 8.

Here, when the measured value of the temperature of the plurality of batteries 30 is smaller than the third temperature threshold, the output controller 32 may control the conversion circuit 31 such that the magnitude of the output voltage of the plurality of batteries 30 to the electric tool body 8 is reduced.

The electric tool body 8 is configured to select a value of a rated input voltage from a plurality of values. For example, the electric tool body 8 is configured to select the value of the rated input voltage from 14.4 V and 18 V. The electric tool body 8 is configured to select the value of the rated input voltage by an operation given to a button provided to electric tool body 8. The value of the rated input voltage thus selected may be included in the information regarding the electric tool body 8. That is, the output controller 32 may control the output of the plurality of batteries 30 to the electric tool body 8 based on the value of the rated input voltage thus selected.

According to the battery unit 2 of the present embodiment, the output controller 32 of the battery pack 3 controls the output of the plurality of batteries 30 to the electric tool body 8 in accordance with a condition. This enables the possibility of occurrence of failure in the electric tool body 8 to be reduced.

The output controller 32 controls the output of the plurality of batteries 30 specifically such that the output of the plurality of batteries 30 to the electric tool body 8 is less than or equal to the upper limit value of the voltage suppliable to the electric tool body 8. The output controller 32 controls the output voltage of the plurality of batteries 30 to control the output current of the plurality of batteries 30. Accordingly, when the battery pack 3 is replaced with a battery pack having another item number and having a different output voltage and a different output current, there is no need to replace the electric tool body 8 with an electric tool body of another item number, and therefore, the identical electric tool body 8 can continuously be used. For example, between a plurality of batteries which have the same cell voltages and different values of internal resistances, output voltages are different from each other, and output currents are different from each other. However, in the battery unit 2, it is possible to use batteries including any of the plurality of batteries.

### (Variation of First Embodiment)

Variations of the first embodiment will be described below. The variations described below may be accordingly combined with each other.

In the first embodiment, it is described that the motor 81 in the electric tool body 8 is a brushless motor. However, the motor 81 may be a brush motor.

The information acquirer 33 may acquire information regarding the type of the motor 81 of the electric tool body 8 and information regarding a control method of the motor 81. The information regarding the type of the motor 81 includes, for example, information regarding whether the motor 81 is a brush motor or brushless motor. The information regarding the control method of the motor 81 is, for example, whether or not a sensing result of a location of a rotor of the motor 81 is adopted, whether or not the inverter 83 is controlled, or whether or not the magnitude of the torque of the motor 81 is controlled. The output controller 32 may control the output of the plurality of batteries 30 to the electric tool body 8 in accordance with a condition based on pieces of information acquired by the information acquirer 33.

Moreover, the output controller 32 may calculate the range of voltage suppliable to the electric tool body 8 by, for example, applying the information acquired by the information acquirer 33 to the condition expression. As described above, when the information acquirer 33 acquires the information regarding the type of the motor 81 of the electric tool body 8, the information regarding the control method of the motor 81, and the like, the output controller 32 can calculate the range of voltage suppliable to the electric tool body 8.

The information regarding the electric tool body 8 may include information regarding the type of the electric tool body 8. The output controller 32 may control the output from the plurality of batteries 30 to the electric tool body 8 in accordance with a condition based on the information regarding the type of the electric tool body 8. The information regarding the type of the electric tool body 8 is, for example, the item number, model number, product number, serial number, product name, manufacturing date, or manufacturer's name of the electric tool body 8. The information which the information acquirer 33 acquires and which relates to the electric tool body 8 may be manually input by a user to an input device included in the battery unit 2. Specifically, information regarding the item number or the like of the electric tool body 8 may be manually input to the input device.

Moreover, the information acquirer 33 may acquire body information from the charger 5. Specifically, a storage device included in the charger 5 stores a correspondence table representing the correspondence between the item number of the electric tool body 8 and the range of voltage suppliable to the electric tool body 8. The information acquirer 33 may acquire the correspondence table from the storage device.

Moreover, when the output voltage of the plurality of batteries 30 decreases, the output controller 32 may reduce the output voltages from the conversion circuit 31. Thus, when the output voltage of the plurality of batteries 30 decreases, the torque of the motor 81 of the electric tool body 8 decreases, but a prolonged period of use of the electric tool body 8 is possible. Moreover, in a case where a portable lighting fixture, instead of the electric tool body 8, is attached to the battery pack 3, the output controller 32 may reduce electric power supplied to the portable type lighting fixture when the output voltage of the plurality of batteries 30 decreases.

The storage 36 may store control contents of the conversion circuit 31 instead of the range of voltage suppliable to the electric tool body 8. For example, the storage 36 may store, as a control content of the conversion circuit 31, a duty ratio of a PWM signal output from the output controller 32 to the conversion circuit 31 when the output controller 32 performs PWM control of the output voltage of the conversion circuit 31.

The output controller 32 of the first embodiment controls the output voltage of the plurality of batteries 30. The control contents of the output controller 32 are not limited to this example, but the output controller 32 may control the output current or output power of the plurality of batteries 30.

The output controller 32 of the first embodiment determines, in accordance with the information regarding the electric tool body 8, the upper limit value of the magnitude of the output voltage of the plurality of batteries 30, and a timing for starting control of reducing the magnitude of the output voltage of the plurality of batteries 30 when the magnitude of the output voltage of the plurality of batteries 30 exceeds the upper limit value. As described above, the output controller 32 of the first embodiment controls the output voltage of the plurality of batteries 30 in accordance with the output voltage of the plurality of batteries 30. The output controller 32 is not limited to this example but may control the output current of the plurality of batteries 30 in accordance with the output current of the plurality of batteries 30. Alternatively, the output controller 32 may control the output power of the plurality of batteries 30 in accordance with the output power of the plurality of batteries 30. The output controller 32 may control at least one of the output voltage, output current, or output power of the plurality of batteries 30 in accordance with at least one of the output voltage, output current, or output power of the plurality of batteries 30. Here, controlling at least one of the output voltage, output current, or output power of the plurality of batteries 30 includes controlling a timing for starting control of reducing the magnitude of at least one of the output voltage, output current, or output power of the plurality of batteries 30. Moreover, controlling at least one of the output voltage, output current, or output power of the plurality of batteries 30 may include controlling the magnitude of at least one of the output voltage, output current, or output power of the plurality of batteries 30.

The plurality of batteries 30 do not necessarily have to be included in the configuration of the battery pack 3.

The plurality of batteries 30 are not limited to be connected in series but may be connected in parallel or series-parallel. Moreover, the plurality of batteries 30 may be primary batteries.

### (Summary of First Embodiment and Variation of First Embodiment)

The first embodiment and the variations of the first embodiment described above disclose the following aspects.

The battery unit 2 includes the battery pack 3. The battery pack 3 accommodates the battery 30. The battery pack 3 is attachable to the electric tool body 8. The battery pack 3 includes an output controller 32. The output controller 32 is configured to control an output of the battery 30 to the electric tool body 8 in accordance with a condition.

With this configuration, the output controller 32 controls an output of the battery 30 to the electric tool body 8 in accordance with the condition. This enables the possibility of occurrence of failure in the electric tool body 8 to be reduced.

Moreover, in the battery unit 2, the condition includes a condition based on information regarding the electric tool body 8.

The configuration described above enables the output controller 32 to control the output of the battery 30 to the electric tool body 8 in accordance with the information regarding the electric tool body 8.

Moreover, in the battery unit 2, the battery pack 3 further includes the information acquirer 33. The information acquirer 33 is configured to acquire, from the electric tool body 8, the information regarding the electric tool body 8.

With this configuration, the information acquirer 33 acquires, from the electric tool body 8, the information regarding the electric tool body 8. Therefore, there is no need to provide an additional component for providing the information regarding the electric tool body 8 to the information acquirer 33.

Moreover, in the battery unit 2, the output controller 32 is configured to determine, in accordance with the information regarding the electric tool body 8, at least one of: the upper limit value of the magnitude of the output of the battery 30; or a timing for starting control of reducing the magnitude of the output of the battery 30 when the magnitude of an output of the battery 30 exceeds the upper limit value.

With this configuration, it is possible to reduce excessive output from the battery 30 to the electric tool body 8.

Moreover, in the battery unit 2, the output controller 32 is configured to determine, as the upper limit value of the magnitude of the output of the battery 30, an upper limit value of a magnitude of an output voltage of the battery 30 in accordance with the information regarding the electric tool body 8.

With this configuration, it is possible to reduce application of an excessive voltage from the battery 30 to the electric tool body 8.

Moreover, in the battery unit 2, the output controller 32 is configured to perform PWM control such that the magnitude of the output voltage of the battery 30 is lower than or equal to the upper limit value.

This configuration enables the output controller 32 to continuously change the magnitude of the output voltage of the battery 30.

Moreover, in the battery unit 2, the battery pack 3 further includes the current value acquirer 34. The current value acquirer 34 is configured to acquire a detection value of a current flowing through the motor 81 included in the electric tool body 8. The information regarding the electric tool body 8 includes the detection value of the current flowing through the motor 81.

This configuration enables the output controller 32 to control the output of the battery 30 to the electric tool body 8 in accordance with the value of a current flowing through the motor 81.

Moreover, in the battery unit 2, the information regarding the electric tool body 8 includes information regarding the type of the electric tool body 8. With this configuration, it is possible to control the output of the battery 30 to the electric tool body 8 in accordance with the type of the electric tool body 8. Moreover, in the battery unit 2, the information regarding the electric tool body 8 includes information representing a range of voltage suppliable to the electric tool body 8. With this configuration, it is possible to reduce the possibility of application of an overvoltage to the electric tool body 8. Moreover, in the battery unit 2, the condition includes the temperature of the battery 30.

With this configuration, it is possible to control the output of the battery 30 to the electric tool body 8 in accordance with the temperature of the battery 30.

The battery unit 2 further includes a charger 5. The battery pack 3 is connectable to the charger 5. The charger 5 is configured to charge a secondary battery serving as the battery 30.

This configuration enables the battery 30 to be repetitively used by being charged.

Moreover, the electric tool system 1 includes the battery unit 2 and the electric tool body 8.

With this configuration, the output controller 32 controls an output of the battery 30 to the electric tool body 8 in accordance with the condition. This enables the possibility of occurrence of failure in the electric tool body 8 to be reduced.

### (Second Embodiment)

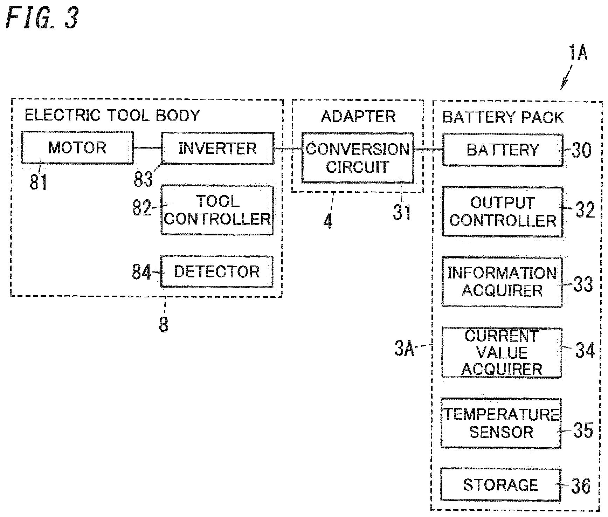

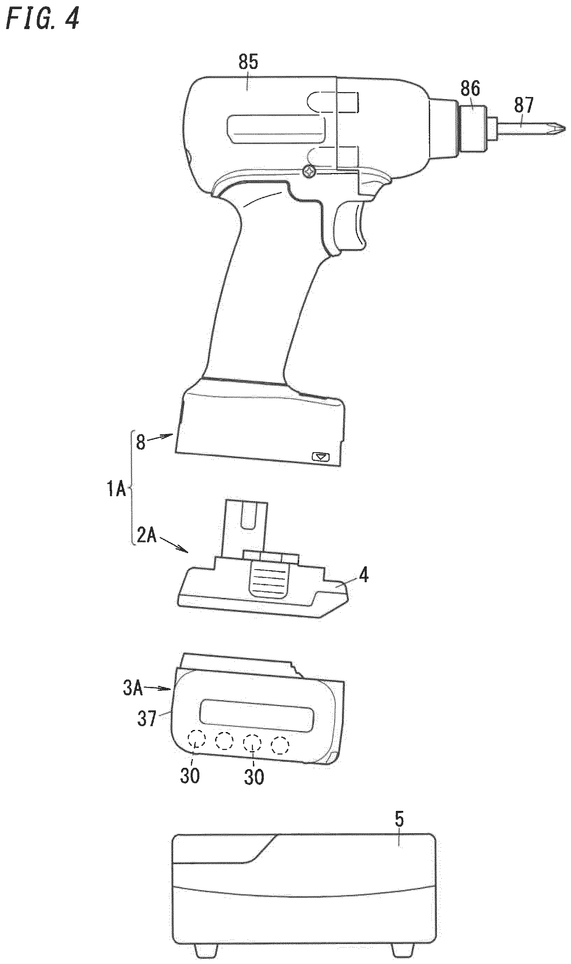

A battery unit 2A and an electric tool system 1A according to a second embodiment will be described below with reference to FIGS. 3 and 4. Components similar to those in the first embodiment are denoted by the same reference signs, and the description thereof will be omitted.

The battery unit 2A further includes an adapter 4. A conversion circuit 31 is included in the adapter 4 but not in a battery pack 3A. The adapter 4 is separable from the battery pack 3A. The conversion circuit 31 is thus separable from the battery pack 3A.

The adapter 4 is connectable to an electric tool body 8 and the battery pack 3A. The adapter 4 is used when an output voltage of a plurality of batteries 30 is outside a range of voltage suppliable to the electric tool body 8.

The battery pack 3A outputs a direct-current voltage as the output voltage from the plurality of batteries 30 to the adapter 4. The conversion circuit 31 of the adapter 4 performs DC-DC conversion of a direct-current voltage into a voltage within the range suppliable to the electric tool body 8, and the conversion circuit 31 outputs the voltage to the electric tool body 8.

### (Summary of Second Embodiment)

Based on the second embodiment described above, the following aspects are disclosed.

The battery unit 2A according to the present embodiment includes the conversion circuit 31. The conversion circuit 31 is configured to change the magnitude of an output of the battery 30 in accordance with the control performed by the output controller 32. The conversion circuit 31 is separable from the battery pack 3A.

With this configuration, using the conversion circuit 31 and the battery pack 3A together is possible, or alternatively, using the battery pack 3A without using the conversion circuit 31 is possible.

Each embodiment described above, inclusively of the variations, may be realized by being accordingly combined with each other.

### Reference Signs List

- 1, 1A: Electric Tool System
- 2, 2A: Battery Unit
- 3, 3A: Battery Pack
- 30: Battery
- 32: Output Controller
- 33: Information Acquirer
- 34: Current Value Acquirer
- 5: Charger
- 8: Electric Tool Body
- 81: Motor

## Claims

1. A battery unit (2), comprising:
a battery pack (3) accommodating a battery (30) and attachable to an electric tool body (8);
the battery pack (3) including an output controller (32) configured to control an output of the battery (30) to the electric tool body (8) in accordance with a condition,
wherein the condition includes a condition based on information regarding the electric tool body (8),
**characterised in that**
the output controller (32) is configured to determine, in accordance with the information regarding the electric tool body (8), a timing for starting control of reducing a magnitude of the output of the battery (30) when the magnitude of the output of the battery (30) exceeds an upper limit value of the magnitude of the output of the battery (30).

2. The battery unit (2) of claim 1, wherein
the battery pack (3) further includes an information acquirer (33) configured to acquire, from the electric tool body (8), the information regarding the electric tool body (8).

3. The battery unit (2) of claim 1 or 2, wherein
the output controller (32) is configured to determine, in accordance with the information regarding the electric tool body (8) the upper limit value of the magnitude of the output of the battery (30).

4. The battery unit (2) of claim 3, wherein
the output controller (32) is configured to determine, as the upper limit value of the magnitude of the output of the battery (30), an upper limit value of a magnitude of an output voltage of the battery (30) in accordance with the information regarding the electric tool body (8).

5. The battery unit (2) of claim 4, wherein
the output controller (32) is configured to perform PWM control such that the magnitude of the output voltage of the battery (30) is lower than or equal to the upper limit value.

6. The battery unit (2) of any one of claims 1 to 5, wherein
the battery pack (3) further includes a current value acquirer (34) configured to acquire a detection value of a current flowing through a motor (81) included in the electric tool body (8), and
the information regarding the electric tool body (8) includes the detection value.

7. The battery unit (2) of any one of claims 1 to 6, wherein
the information regarding the electric tool body (8) includes information regarding a type of the electric tool body (8).

8. The battery unit (2) of any one of claims 1 to 7, wherein
the information regarding the electric tool body (8) includes information representing a range of voltage suppliable to the electric tool body (8).

9. The battery unit (2) of any one of claims 1 to 8, wherein
the condition includes a condition regarding temperature of the battery (30).

10. The battery unit (2A) of any one of claims 1 to 9, further comprising a conversion circuit (31) configured to change the magnitude of an output of the battery (30) in accordance with the control performed by the output controller (32),
the conversion circuit (31) being separable from the battery pack (3).

11. The battery unit (2) of any one of claims 1 to 10, further comprising a charger (5) to which the battery pack (3) is connectable and which is configured to charge a secondary battery serving as the battery (30).

12. An electric tool system (1), comprising:
the battery unit (2) of any one of claims 1 to 11; and
the electric tool body (8).

## Patentansprüche

1. Eine Batterieeinheit (2), die Folgendes umfasst:
ein Batteriepack (*battery pack*) (3), das eine Batterie (30) aufnimmt und an einem Elektrowerkzeugkörper (8) anbringbar ist,
wobei das Batteriepack (3) eine Ausgangssteuervorrichtung (32) beinhaltet, die konfiguriert ist, um eine Ausgangsleistung (*output*) der Batterie (30) zum Elektrowerkzeugkörper (8) entsprechend einer Bedingung zu steuern,
wobei die Bedingung eine Bedingung beinhaltet, die auf Informationen bezüglich des Elektrowerkzeugkörpers (8) basiert,
**dadurch gekennzeichnet, dass**
die Ausgangssteuervorrichtung (32) konfiguriert ist, um entsprechend der Informationen bezüglich des Elektrowerkzeugkörpers (8) einen Zeitpunkt zum Starten einer Steuerung zum Verringern eines Maßes der Ausgangsleistung der Batterie (30) zu bestimmen, wenn das Maß der Ausgangsleistung der Batterie (30) einen oberen Grenzwert des Maßes der Ausgangsleistung der Batterie (30) überschreitet.

2. Die Batterieeinheit (2) nach Anspruch 1, wobei
das Batteriepack (3) ferner einen Informations-Erfasser (33) beinhaltet, der konfiguriert ist, um ausgehend vom Elektrowerkzeugkörper (8) die Informationen bezüglich des Elektrowerkzeugkörpers (8) zu erfassen.

3. Die Batterieeinheit (2) nach Anspruch 1 oder 2, wobei
die Ausgangssteuervorrichtung (32) konfiguriert ist, um entsprechend der Informationen bezüglich des Elektrowerkzeugkörpers (8) den oberen Grenzwert des Maßes der Ausgangsleistung der Batterie (30) zu bestimmen.

4. Die Batterieeinheit (2) nach Anspruch 3, wobei
die Ausgangssteuervorrichtung (32) konfiguriert ist, um als oberen Grenzwert des Maßes der Ausgangsleistung der Batterie (30) einen oberen Grenzwert einer Größe einer Ausgangsspannung der Batterie (30) gemäß den Informationen bezüglich des Elektrowerkzeugkörpers (8) zu bestimmen.

5. Die Batterieeinheit (2) nach Anspruch 4, wobei
die Ausgangssteuervorrichtung (32) konfiguriert ist, um eine PWM-Steuerung durchzuführen, sodass die Größe der Ausgangsspannung der Batterie (30) kleiner oder gleich dem oberen Grenzwert ist.

6. Die Batterieeinheit (2) nach irgendeinem der Ansprüche von 1 bis 5, wobei
das Batteriepack (3) ferner einen Stromwert-Erfasser (34) beinhaltet, der konfiguriert ist, um einen Erfassungswert eines durch einen im Elektrowerkzeugkörper (8) enthaltenen Motor (81) fließenden Stroms zu erfassen, und wobei
die Informationen bezüglich des Elektrowerkzeugkörpers (8) den Erfassungswert beinhalten.

7. Die Batterieeinheit (2) nach irgendeinem der Ansprüche von 1 bis 6, wobei
die Informationen bezüglich des Elektrowerkzeugkörpers (8) Informationen bezüglich eines Typs des Elektrowerkzeugkörpers (8) beinhalten.

8. Die Batterieeinheit (2) nach irgendeinem der Ansprüche von 1 bis 7, wobei
die Informationen bezüglich des Elektrowerkzeugkörpers (8) Informationen beinhalten, die einen Spannungsbereich darstellen, der an das Elektrowerkzeuggehäuse (8) zuführbar ist.

9. Die Batterieeinheit (2) nach irgendeinem der Ansprüche von 1 bis 8, wobei
die Bedingung eine Bedingung bezüglich der Temperatur der Batterie (30) beinhaltet.

10. Die Batterieeinheit (2A) nach irgendeinem der Ansprüche von 1 bis 9, die ferner eine Umsetzungsschaltung (31) umfasst, die konfiguriert ist, um ein Maß der Ausgangsleistung der Batterie (30) entsprechend der von der Ausgangssteuervorrichtung (32) durchgeführten Steuerung zu ändern, wobei die Umsetzungsschaltung (31) vom Batteriepack (3) trennbar ist.

11. Die Batterieeinheit (2) nach irgendeinem der Ansprüche von 1 bis 10, die ferner ein Ladegerät (5) umfasst, an das das Batteriemodul (3) anschließbar ist und das konfiguriert ist, um eine als Batterie (30) dienende Sekundärbatterie zu laden.

12. Ein Elektrowerkzeugsystem (1), das Folgendes umfasst:
die Batterieeinheit (2) nach irgendeinem der Ansprüche von 1 bis 11; und
den Elektrowerkzeugkörper (8).

## Revendications

1. Une unité de batterie (2) comprenant :
un bloc-batterie (3) logeant une batterie (30) et pouvant être fixé à un corps d'outil électrique (8) ;
le bloc-batterie (3) incluant un dispositif de commande de sortie (32) configuré pour commander une sortie de la batterie (30) vers le corps d'outil électrique (8) en fonction d'une condition, sachant que
la condition inclut une condition basée sur des informations concernant le corps d'outil électrique (8),
**caractérisée en ce que**
le dispositif de commande de sortie (32) est configuré pour déterminer, en fonction des informations concernant le corps d'outil électrique (8), un moment pour démarrer la commande de réduction d'une grandeur de la sortie de la batterie (30) lorsque la grandeur de la sortie de la batterie (30) dépasse une valeur limite supérieure de la grandeur de la sortie de la batterie (30).

2. L'unité de batterie (2) d'après la revendication 1, sachant que
le bloc-batterie (3) inclut en outre un dispositif d'acquisition d'informations (33) configuré pour acquérir, à partir du corps d'outil électrique (8), les informations concernant le corps d'outil électrique (8).

3. L'unité de batterie (2) d'après la revendication 1 ou 2, sachant que
le dispositif de commande de sortie (32) est configuré pour déterminer, conformément aux informations concernant le corps d'outil électrique (8), la valeur limite supérieure de la grandeur de la sortie de la batterie (30).

4. L'unité de batterie (2) d'après la revendication 3, sachant que
le dispositif de commande de sortie (32) est configuré pour déterminer, en tant que valeur limite supérieure de la grandeur de la sortie de la batterie (30), une valeur limite supérieure d'une valeur d'une tension de sortie de la batterie (30) en fonction des informations concernant le corps d'outil électrique (8).

5. L'unité de batterie (2) d'après la revendication 4, sachant que
le dispositif de commande de sortie (32) est configuré pour effectuer une commande MLI de manière que la valeur de la tension de sortie de la batterie (30) soit inférieure ou égale à la valeur limite supérieure.

6. L'unité de batterie (2) d'après l'une quelconque des revendications de 1 à 5, sachant que
le bloc-batterie (3) inclut en outre un dispositif d'acquisition de valeur de courant (34) configuré pour acquérir une valeur de détection d'un courant circulant à travers un moteur (81) inclus dans le corps d'outil électrique (8), et que
les informations concernant le corps d'outil électrique (8) incluent la valeur de détection.

7. L'unité de batterie (2) d'après l'une quelconque des revendications de 1 à 6, sachant que
les informations concernant le corps d'outil électrique (8) incluent des informations concernant un type du corps d'outil électrique (8).

8. L'unité de batterie (2) d'après l'une quelconque des revendications de 1 à 7, sachant que
les informations concernant le corps d'outil électrique (8) incluent des informations représentant une plage de tension pouvant être fournie au corps d'outil électrique (8).

9. L'unité de batterie (2) d'après l'une quelconque des revendications de 1 à 8, sachant que
la condition inclut une condition concernant la température de la batterie (30).

10. L'unité de batterie (2A) d'après l'une quelconque des revendications de 1 à 9, comprenant en outre un circuit de conversion (31) configuré pour modifier la grandeur d'une sortie de la batterie (30) conformément à la commande effectuée par le dispositif de commande de sortie (32),
le circuit de conversion (31) pouvant être séparé du bloc-batterie (3).

11. L'unité de batterie (2) d'après l'une quelconque des revendications de 1 à 10, comprenant en outre un chargeur (5) auquel le bloc-batterie (3) peut être connecté et qui est configuré pour charger une batterie secondaire servant de batterie (30).

12. Un système d'outil électrique (1), comprenant :
l'unité de batterie (2) d'après l'une quelconque des revendications de 1 à 11 ; et
le corps d'outil électrique (8).
